# EUROPÄISCHE PATENTSCHRIFT

(11) **EP 3 961 898 B1**
(45) Veröffentlichungstag und Bekanntmachung des Hinweises auf die Patenterteilung: **25.01.2023**
(21) Anmeldenummer: 20209579.0
(22) Anmeldetag: 24.11.2020
(51) Int. Cl.: H02M 3/335, H02J 1/08, H02P 5/68

(54) **SPINNMASCHINE**
SPINNING FRAME
MÉTIER À FILER

(30) Priorität: 31.08.2020 EP 20193600
(43) Veröffentlichungstag der Anmeldung: 02.03.2022
(73) Patentinhaber: Maschinenfabrik Rieter AG, 8406 Winterthur (CH)
(72) Erfinder: INGOLD, Benedikt, 8953 Dietikon (CH); FAVERO, Elia, 8408 Winterthur (CH)

(56) Entgegenhaltungen:
- EP-A1- 2 760 115
- EP-A2- 1 927 686
- DINESH KUMAR ET AL: "DC Microgrid Technology: System Architectures, AC Grid Interfaces, Grounding Schemes, Power Quality, Communication Networks, Applications, and Standardizations Aspects", IEEE ACCESS, Bd. 5, 1. Januar 2017 (2017-01-01), Seiten 12230-12256, XP055585114, DOI: 10.1109/ACCESS.2017.2705914

## Beschreibung

### TECHNISCHES GEBIET

Die vorliegende Erfindung betrifft eine Spinnmaschine mit einer Vielzahl von Arbeitsstellen mit elektrischen Antrieben, insbesondere Gleichstrommotoren, mit mindestens zwei Gleichspannungsquellen der Spannungen U1 und U2, welche jeweils ein Gleichspannungsnetz N1 und N2 bilden, wobei an den mindestens zwei Gleichspannungsquellen mindestens drei Gleichspannungsschienen zur Versorgung einer Vielzahl der Antriebe, insbesondere der Gleichstrommotoren, angeschlossen sind, derart, dass die erste Gleichspannungsschiene mit der ersten Gleichspannungsquelle, die zweite Gleichspannungsschiene mit der zweiten Gleichspannungsquelle und die dritte Gleichspannungsschiene mit der ersten Gleichspannungsquelle und der zweiten Gleichspannungsquelle in elektrischer Wirkverbindung steht und wobei Stromabnehmer einer Vielzahl der Antriebe, insbesondere der Gleichstrommotoren, wahlweise an der ersten und der dritten Gleichspannungsschiene oder an der zweiten Gleichspannungsschiene und der dritten Gleichspannungsschiene angeschlossen sind.

### TECHNOLOGISCHER HINTERGRUND

Aus der EP 1927686 A2 ist eine Spinnmaschine mit elektrischen Antrieben und einer Stromversorgungseinrichtung für Elektromotoren mit Gleichspannungs- und Wechselspannungsquellen bekannt. Mindestens ein Transformator ist an ein Wechselspannungsnetz angeschlossen. Da in einer Spinnmaschine zahlreiche sehr unterschiedlich ausgelegte Elektromotoren Verwendung finden, muss bei der Auslegung der Stromversorgung auf die individuellen Anforderungen der einzelnen Motoren und die Energieverteilung durch die Maschine besonderer Wert gelegt werden. Es wird deshalb dort vorgeschlagen, innerhalb der Spinnmaschine die Energieversorgung so zu gestalten ist, dass abhängig von Motortyp und dessen Position innerhalb der Maschine ideale Spannungsverhältnisse gegeben sind. Dafür sind an zwei sekundäre Transformatorenwicklungen zwei Gleichrichtergruppen angeschlossen, die an je zwei Gleichspannungsschienen gebunden sind, wobei eine Gleichspannungsschiene beiden Gleichrichtergruppen gemeinsam ist, so dass drei Gleichspannungsschienen vorhanden sind. Zwischen den Schienen liegen verschiedene Gleichspannungen, insbesondere von 270 Volt DC (Volt Gleichstrom) und 540 Volt DC, vor. Mit dem beschriebenen Energieversorgungskonzept ist es möglich, Motoren in Spinnmaschinen mit unterschiedlichen Spannungen zu versorgen und sie mit sehr gutem Wirkungsgrad zu betreiben. So können Motoren zum Antrieb verschiedener Funktionsträger in der Spinnmaschine, beispielsweise der Streckwerkswellen oder eines Ringrahmenhubantriebes, insbesondere mit 540Volt DC versorgt werden. Andere Motoren, die beispielsweise für den Antrieb der Spindeln vorgesehen sind, können insbesondere mit 270 Volt DC betrieben werden. Wieder andere Motoren hängen dagegen an dem Wechselspannungsnetz mit beispielsweise 400 Volt DC. Diese Motoren treiben beispielsweise die Doffer oder die Absaugung an. Eine übergeordnete Steuerung ist mit 24 Volt DC über einen Spannungswandler an das 540 Volt Gleichspannungsnetz, angeschlossen.

Bei einem Netzausfall oder wesentlichen Spannungseinbrüchen wird eine entsprechende Drehzahl-Sollwertabsenkung über einen BUS an alle Driver übermittelt. Dabei gehen die daran angeschlossenen Motoren in einen Generatorbetrieb, wobei infolge der Drehzahlabsenkung die in den rotierenden Massen gespeicherte Energie in elektrische Energie umgewandelt wird und allen im gemeinsamen Zwischenkreis vorhandenen Verbrauchern zugeführt wird.

Ein Problem besteht bei einer asymmetrischen Belastung, d.h. wenn zum Beispiel einzelne Spindeln nicht betrieben werden oder wenn ein Spannungsabfall vorhanden ist. Wenn die Spannung niedriger wird, steigt der Strom und es besteht die Gefahr, dass die Stromversorgung nicht mehr ausreicht. Dies soll verhindert werden.

### DARSTELLUNG DER ERFINDUNG

Aufgabe der vorliegenden Erfindung ist es somit allen Verbrauchern eine gleichmässige Spannung zur Verfügung zu stellen.

Die Aufgabe wird gelöst durch eine Spinnmaschine mit den Merkmalen des Patentanspruchs 1.

Erfindungsgemäss weist eine Spinnmaschine eine Vielzahl von Arbeitsstellen mit elektrischen Antrieben, insbesondere Gleichstrommotoren, auf. Mindestens zwei Gleichspannungsquellen der Spannungen U1 und U2 bilden jeweils ein Gleichspannungsnetz N1 und N2. An den mindestens zwei Gleichspannungsquellen sind mindestens drei Gleichspannungsschienen zur Versorgung einer Vielzahl der Antriebe, insbesondere der Gleichstrommotoren, angeschlossen. Die erste Gleichspannungsschiene steht mit der ersten Gleichspannungsquelle, die zweite Gleichspannungsschiene steht mit der zweiten Gleichspannungsquelle und die dritte Gleichspannungsschiene steht mit der ersten Gleichspannungsquelle und der zweiten Gleichspannungsquelle in elektrischer Wirkverbindung. Die beiden Gleichspannungsnetze N1 und N2 sind vorzugsweise unterschiedlich gepolt, so dass in dem Gleichspannungsnetz N1 beispielsweise eine Spannung U1 mit +270 Volt und in dem Gleichspannungsnetz N2 eine Spannung U2 mit -270 Volt vorliegt. Die Stromabnehmer einer Vielzahl der Antriebe, insbesondere der Gleichstrommotoren, sind wahlweise an der ersten Gleichspannungsschiene und der dritten Gleichspannungsschiene oder an der zweiten Gleichspannungsschiene und der dritten Gleichspannungsschiene angeschlossen. Die beiden Gleichspannungsnetze N1 und N2 sind zum Ausgleich von Spannungsunterschieden in den beiden Gleichspannungsnetzen N1 und N2 mit einer Spannungsausgleichseinrichtung elektrisch wirkverbunden. Durch die Spannungsausgleichseinrichtung wird bewirkt, dass auch bei einem Spannungsabfall in einem Gleichspannungsnetz - oder wenn einzelne Verbraucher, beispielsweise Spindeln, nicht betrieben werden, weil sie beispielsweise gewartet werden - in beiden Gleichspannungsnetzen N1 und N2 im Wesentlichen derselbe Spannungsbetrag anliegt. Die Spannungsausgleichseinrichtung erhöht somit die Spannung in dem Gleichspannungsnetz mit niedrigerer Spannung, indem Energie aus dem anderen Gleichspannungsnetz mit höherer Spannung entnommen wird. Die Energieverschiebung findet solange statt, bis die Differenz der beiden Spannungspegel gegen null geht. Die Summe der Spannung beider Gleichspannungsnetze N1 und N2 bleibt im Wesentlichen konstant. Es findet somit keine asymmetrische Belastung der Gleichspannungsnetze N1 und N2 statt.

Besonders vorteilhaft ist es, wenn als Spannungsausgleichseinrichtung jedem der Gleichspannungsnetze N1 und N2 ein Frequenzumrichter zugeordnet ist und dass die Frequenzumrichter ausgangsseitig mit einem Trenntransformator verbunden sind. Durch die beiden Frequenzumrichter und den Trenntransformator werden ungleiche Spannungen U1 und U2 in den beiden Gleichspannungsnetzen N1 und N2 ausgeglichen. Der jeweilige Ausgang des Frequenzumrichters hängt ausgangsseitig an dem Trenntransformator anstelle von Motorleitungen. Die beiden Spannungen U1 und U2 können damit ausgeglichen werden. Wenn eine der beiden Spannungen zu hoch wird, schiebt die Spannungsausgleichseinrichtung Energie von U1 nach U2 bzw. umgekehrt. Damit wird quasi ein schwebender Mittelpunkt mit etwa gleicher Spannung in beiden Zwischenkreisen erzeugt. An einem der Frequenzumrichter liegt die Spannung U1 an, während an dem anderen Frequenzumrichter die Spannung U2 anliegt. Die Spannungsausgleichseinrichtung regelt auf Differenz. Die höhere Spannung wird verringert, während die niedrigere Spannung erhöht wird. Die höhere Spannung wird verringert, während die niedrigere Spannung um den gleichen Betrag erhöht wird. Damit bleibt die Summe U1, U2 konstant.

Vorteile bringt es zudem mit sich, wenn die Spinnmaschine beidseitig Arbeitsstellen mit Gleichstrommotoren aufweist und jeweils ein Gleichspannungsnetz N1 bzw. N2 den Arbeitsstellen bzw. Antrieben, insbesondere den Gleichstrommotoren, einer Seite zugeordnet ist. Spinnmaschinen, an denen auf beiden Längsseiten Arbeitsstellen mit Antrieben, insbesondere Gleichstrommotoren, angeordnet sind, sind hinsichtlich ihres Platzbedarfs in der Spinnerei besonders effektiv. Ringspinnmaschinen sind üblicherweise als beidseitige Spinnmaschine ausgebildet. Es gibt aber auch andere Spinnmaschinen, beispielsweise manche Luftspinnmaschinen, welche als nur einseitige Spinnmaschine gestaltet sind. Auch für solche Spinnmaschinen ist die vorliegende Erfindung geeignet. Die beiden erfindungsgemäss vorliegenden Gleichspannungsnetze der Spinnmaschine können dabei in einer besonders vorteilhaften Ausführung der Erfindung derart angeordnet sein, dass das Gleichspannungsnetz N1 den Arbeitsstellen auf einer Maschinenseite zugeordnet ist, während das Gleichspannungsnetz N2 den Arbeitsstellen der anderen Maschinenseite zugeordnet ist. Der Spannungsausgleich erfolgt damit bereits zwischen den beiden Maschinenseiten. Dies kann vorteilhaft sein, wenn auf den beiden Maschinenseiten unterschiedliche Garne gesponnen werden und dementsprechend unterschiedliche Wartungszyklen, beispielsweise Spulenwechsel, durchgeführt werden. Die Belastung der beiden Maschinenseiten ist somit zeitlich unterschiedlich. Ein Ausgleich der beiden Gleichspannungsnetze N1 und N2 bringt daher Vorteile bezüglich der Gleichmässigkeit der beiden Gleichspannungsnetze N1 und N2. Besondere Vorteile bringt es mit sich, wenn die Spinnmaschine in Sektionen unterteilt ist, in denen jeweils eine Vielzahl von Arbeitsstellen angeordnet ist und jeweils ein Gleichspannungsnetz N1 bzw. N2 abwechselnd den benachbarten Sektionen zugeordnet ist. Die meisten der bekannten Spinnmaschinen sind in Sektionen unterteilt. Mehrere Arbeitsstellen sind dabei hinsichtlich ihrer Anordnung an der Spinnmaschine zusammengefasst. Auch bezüglich Stromversorgung und Steuerung können diese Arbeitsstellen der jeweiligen Sektionen gemeinsam betrieben werden. Eine Spinnmaschine weist oft eine grosse Anzahl von Sektionen auf. In jeder Sektion sind beispielsweise 24 Arbeitsstellen auf jeder Seite der Maschine zusammengefasst. Werden gemäss der vorteilhaften Ausführung der Erfindung die Gleichspannungsnetze N1 und N2 abwechselnd den benachbarten Sektionen zugeführt, so ist entlang der Längsrichtung der Spinnmaschine abwechselnd eine positive und eine negative Gleichspannung U1 bzw. U2 an den Motoren der Arbeitsstellen der jeweiligen Sektionen anliegend. Die Spinnmaschine ist somit in Längsrichtung bezüglich der Spannungsversorgung unterteilt. Ein ungleichmässiger Betrieb der Motoren in den einzelnen Arbeitsstellen der Sektionen kann damit hinsichtlich der Spannungsversorgung ausgeglichen werden.

Vorteilhaft ist es auch, wenn die Spinnmaschine beidseitig Arbeitsstellen aufweist und in Sektionen unterteilt ist, in denen jeweils eine Vielzahl von Arbeitsstellen angeordnet ist und jeweils ein Gleichspannungsnetz N1 bzw. N2 abwechselnd den gegenüberliegenden Seiten und den benachbarten Sektionen zugeordnet ist. Bei dieser ganz besonders vorteilhaften Ausführung erfolgt nicht nur eine Abwechslung in den benachbarten Sektionen, es sind vielmehr auch die auf den beiden Maschinenseiten sich gegenüberliegenden Arbeitsstellen innerhalb einer Sektion an die unterschiedlichen Gleichspannungsnetze N1 und N2 angeschlossen. Somit erfolgt ein noch besserer Ausgleich unterschiedlicher Spannungen, die in den einzelnen Arbeitsstellen auftreten können. Die Spinnmaschine kann damit noch ausgeglichener hinsichtlich ihrer Spannungsversorgung betrieben werden.

Besondere Vorteile bringt es mit sich, wenn weitere Antriebe, insbesondere Gleichstrommotoren, an die erste Gleichspannungsschiene und an die zweite Gleichspannungsschiene angeschlossen sind. Durch den Anschluss der weiteren Antriebe an die erste Gleichspannungsschiene und an die zweite Gleichspannungsschiene ist es möglich, dass Antriebe, insbesondere Gleichstrommotoren, an der Spinnmaschine mit einer weiteren Spannung U3 betrieben werden können. Eine optimale Spannungsversorgung der Motoren, je nach ihren Aufgaben in der Spinnmaschine kann damit erreicht werden. Während beispielsweise die gleichsamen Motoren, welche die erste und dritte oder die zweite und dritte Gleichspannungsschiene abgreifen mit 270 Volt betrieben werden können, sind diese weiteren Antriebe, welche an die erste und die zweite Gleichspannungsschiene angeschlossen sind, mit U3 = 540 Volt zu betreiben. Diese mit einer höheren Spannung betriebenen Antriebe, insbesondere Gleichstrommotoren, können beispielsweise für das Streckwerk und die Hubeinrichtungen eingesetzt werden, während die Motoren mit der niedrigeren Spannung für den Spindelantrieb optimal betrieben werden können.

Ebenso bringt es Vorteile mit sich, wenn an zwei der Gleichspannungsschienen zumindest ein Wechselrichter mit zumindest einem Wechselstrommotor und/oder ein Gleichspannungstransformator für eine weitere Spannung U4 angeordnet ist. Die Spannungsversorgung erlaubt damit über die Versorgung von Gleichstrommotoren hinaus auch die Versorgung von Wechselstrommotoren mit einer Wechselspannung. Alternativ oder zusätzlich kann ein Gleichspannungstransformator für eine weitere Gleichspannung vorgesehen sein. Dies ist durch die vorteilhafte Anordnung des Wechselrichters und/oder des Gleichspannungstransformators an zwei der Gleichspannungsschienen möglich. Die Wechselstrommotoren können dabei beispielsweise für den Doffer zum Spulenwechsel oder für die Absaugung der Spinnmaschine verwendet werden. Die weitere Gleichspannung des Gleichspannungstransformators kann beispielsweise 24 Volt betragen und der Versorgung der Steuerungen der Maschine dienen.

Besondere Vorteile bringt es mit sich, wenn der Trenntransformator ein Hochfrequenztransformator ist. Der Hochfrequenztransformator weist vorteilhafterweise einen hohen Umwandlungswirkungsgrad und eine geringe Grösse auf.

Auch ist es von Vorteil, wenn die Frequenzumrichter Bremswiderstände aufweisen, um Spannungsspitzen zu begrenzen. Über die Bremswiderstände wird die überschüssige Spannung aus dem Gleichspannungsnetz N1 bzw. N2 abgebaut. Damit kann die Sicherheit des gesamten Systems gewährleistet werden.

Des Weiteren ist es vorteilhaft, wenn die beiden Gleichspannungsnetze N1 und N2 Symmetriewiderstände aufweisen, um einen Grundpegel der Gleichspannungsnetze N1 und N2 zu erhalten. Die Symmetriewiderstände sind als Ausgleich für einen Grundpegel vorhanden, damit die Zwischenkreise nicht wegdriften, beispielsweise beim Einschalten der Maschine. Spannungsspitzen werden damit abgebaut. Zwischen jeweils zwei der drei Gleichspannungsschienen sind Elektrolytkondensatoren in Reihe angeordnet, um die Spannung aufzuteilen. Um nun eine gleichmässige Aufteilung der Spannung zu gewährleisten, sind die Symmetriewiderstände parallel zu den Elektrolytkondensatoren und ebenfalls in Reihe geschaltet.

Ebenso ist es vorteilhaft, wenn die beiden Gleichspannungsnetze N1 und N2 gegensinnig gepolt sind. Für die Spannungsversorgung der Maschine wechseln positive und negative Spannung, beispielsweise U1 = +270 Volt und U2 = -270 Volt, einander ab. Hierdurch wird sichergestellt, dass bei Ausfall beispielsweise einer Maschinenseite dennoch eine gleichbleibende mittlere Spannung vorhanden ist und der schwebende Mittelpunkt aufrechterhalten werden kann.

Die Spinnmaschine ist gemäss der vorangegangenen Beschreibung ausgebildet, wobei die genannten Merkmale einzeln oder in beliebiger Kombination vorhanden sein können.

Anstelle oder zusätzlich zu den zuvor beschriebenen Gleichstrommotoren können auch mittels Wechselrichter an die Gleichspannungsschienen angeschlossene Wechselstrommotoren verwendet werden.

### KURZE ERLÄUTERUNGEN ZU DEN FIGUREN

Weitere Vorteile der Erfindung sind in den nachfolgenden Ausführungsbeispielen beschrieben. Es zeigt
- **Figur 1**: eine Skizze einer erfindungsgemässen Spannungsversorgung einer Spinnmaschine,
- **Figur 2**: eine Skizze einer Spannungsausgleichseinrichtung,
- **Figur 3**: eine Skizze einer alternativen Spannungsverteilung in der Spinnmaschine und
- **Figur 4**: eine Skizze einer weiteren alternativen Spannungsverteilung in der Spinnmaschine.

### WEGE ZUR AUSFÜHRUNG DER ERFINDUNG

Bei der nachfolgenden Beschreibung der dargestellten alternativen Ausführungsbeispiele werden für Merkmale, die im Vergleich zu den anderen Figuren dargestellten Ausführungsbeispielen in ihrer Ausgestaltung und/oder Wirkweise gleich sind, dieselben Bezugszeichen verwendet. Sofern nichts Abweichendes erläutert wird, entspricht deren Ausgestaltung und/oder Wirkweise der Ausgestaltung und/oder Wirkweise der anderweitig beschriebenen Merkmale. Aus Gründen der besseren Übersichtlichkeit wurden gleichartige Bauelemente teilweise nur vereinzelt mit Bezugszeichen versehen.

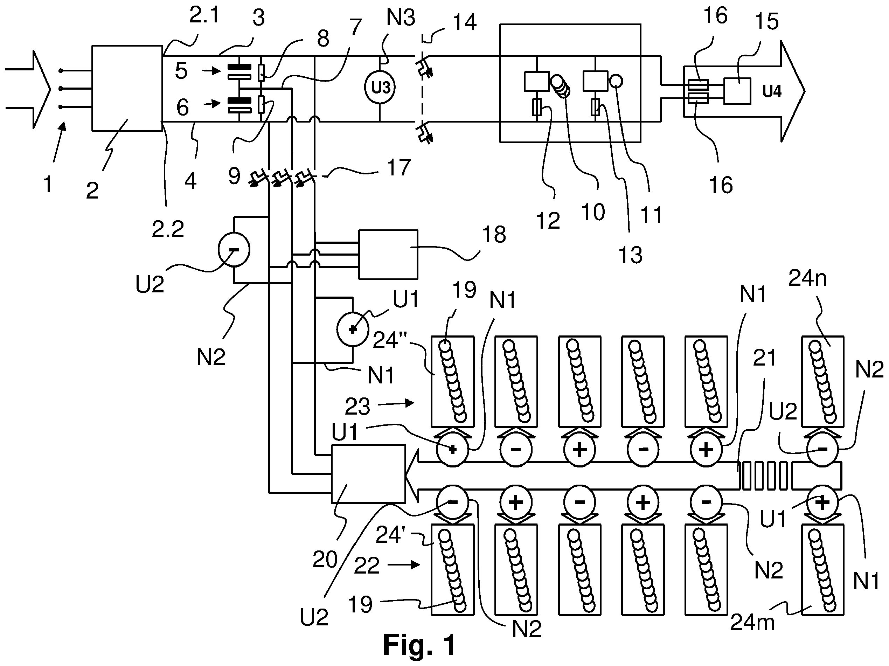

In **Figur 1** ist eine Skizze einer erfindungsgemässen Spannungsversorgung einer Spinnmaschine, beispielsweise einer Ringspinnmaschine, einer Luftspinnmaschine oder einer Rotorspinnmaschine, dargestellt.

Die Spinnmaschine ist an eine primäre, 3-phasige Wechselspannungsquelle 1 mit jeweils beispielsweise 400 Volt angeschlossen. Mittels einer Einspeiseeinheit 2 wird eine 540 Volt Gleichspannung U3 in einem Gleichstromnetz N3 erzeugt. An der Einspeiseeinheit 2 sind ausgangsseitig an einer ersten Gleichspannungsquelle 2.1 eine erste Gleichspannungsschiene 3 und an einer zweiten Gleichspannungsquelle 2.2 eine zweite Gleichspannungsschiene 4 angeordnet. Zwischen den beiden Gleichspannungsschienen 3 und 4 sind in Reihe zwei Elektrolytkondensatoren 5 und 6 geschaltet. Durch eine dritte Gleichspannungsschiene 7 zwischen den beiden Elektrolytkondensatoren 5 und 6 wird die Spannung U3 zwischen den beiden Gleichspannungsschienen 3 und 4 aufgeteilt. Hierdurch liegt zwischen der ersten Gleichspannungsschiene 3 und der dritten Gleichspannungsschiene 7 in einem ersten Gleichspannungsnetz N1 eine Spannung U1 = +270 Volt an. Auch zwischen der zweiten Gleichspannungsschiene 4 und der dritten Gleichspannungsschiene 7 ist ebenfalls eine Spannung, hier in einem zweiten Gleichspannungsnetz N2 mit U2 = -270 Volt vorhanden. Es soll sichergestellt werden, dass die beiden 270 Volt Spannungen bezüglich ihres Betrages weitgehend gleich sind und keine ungleichmässigen Spannungen in den beiden Gleichspannungsnetzen N1 und N2 vorhanden sind, auch falls eine ungleiche Belastung vorliegt, und somit ein gleicher Grundpegel eingehalten werden kann. Daher sind parallel zu den beiden Elektrolytkondensatoren 5 und 6 zwei ebenfalls in Reihe geschaltete Symmetriewiderstände 8 und 9 angeordnet.

Zwischen der ersten Gleichspannungsschiene 3 und der zweiten Gleichspannungsschiene 4 liegt das dritte Gleichspannungsnetz N3 mit 540 Volt an. An dieses Gleichspannungsnetz N3 sind Verbraucher angeschlossen, deren Wirkungsgrad bei einer höheren Spannung günstiger ist. Hierfür sind beispielsweise Gleichstrommotoren 10 für ein Streckwerk der Spinnmaschine und für Hubeinrichtungen von Ringbänken oder Spindelbänken vorgesehen. Ein weiterer Gleichstrommotor 11 kann beispielsweise für eine Absaugeinrichtung der Maschine eingesetzt werden. Die Motoren sind jeweils über eine Sicherung 12 und 13 abgesichert. Eine weitere Sicherung gegenüber einer Überlastung des Gleichspannungsnetzes N3 erfolgt mittels eines Thermoschalters 14, welcher bei einer Überhitzung die beiden Gleichspannungsschienen 3 und 4 im Gleichspannungsnetz N3 von der Spannungsversorgung trennt.

Im weiteren Verlauf der beiden Gleichspannungsschienen 3 und 4 des Gleichspannungsnetzes N3 ist ein Gleichspannungstransformator 15 angeordnet. Der Gleichspannungstransformator 15 wandelt die 540 Volt Gleichspannung in eine 24 Volt Gleichspannung. Diese niedrigere 24 Volt Gleichspannung steht über Sicherungen 16 beispielsweise für eine Maschinensteuerung zur Verfügung. Anstelle des oder zusätzlich zu dem Gleichspannungstransformator/s 15 kann auch ein Wechselrichter vorgesehen sein, an dem ein Wechselstrommotor angeschlossen ist.

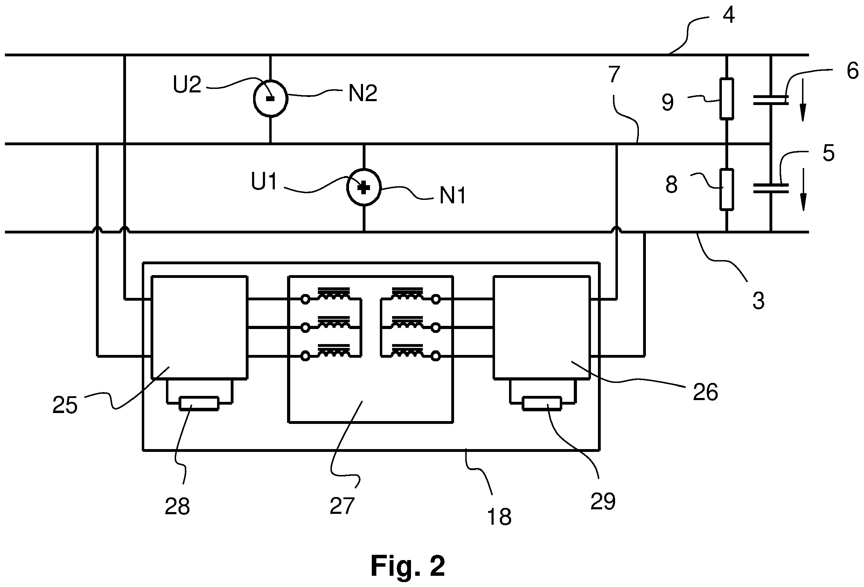

Die beiden Gleichspannungsnetze N1 und N2 sind ebenfalls über einen Thermoschalter 17 gegenüber einer thermischen Überlastung abgesichert. In dem ersten Gleichspannungsnetz N1 liegt eine positive Spannung U1 = +270 Volt an, während in dem zweiten Gleichspannungsnetz N2 eine negative Spannung U2 = -270 Volt vorhanden ist. Um die beiden Gleichspannungsnetze N1 und N2 im Wesentlichen auf demselben Spannungsniveau zu halten, auch wenn eine unterschiedliche Last durch die Verbraucher vorliegt, ist eine Spannungsausgleichseinrichtung 18 an die drei Gleichspannungsschienen 3, 4 und 7 angeschlossen. Die Spannungsausgleichseinrichtung 18 wird in **Figur 2** näher beschrieben werden.

An die beiden Gleichspannungsnetze N1 und N2 ist eine Vielzahl von Gleichstrommotoren 19 für Spindelantriebe der Spinnmaschine angeschlossen. Alternativ oder zusätzlich zu den Gleichstrommotoren 19 können auch mittels Wechselrichter an die Gleichspannungsschienen 3, 4, 7 angeschlossene Wechselstrommotoren verwendet werden.

Die Spannungsversorgung erfolgt über ein Verbindungselement 20 und einen Gleichspannungsbus 21. Mittels des Gleichspannungsbusses 21 erfolgt die Verteilung der Spannungsversorgung der Gleichstrommotoren 19 entlang der Spinnmaschine. Die Spinnmaschine weist zwei Seiten 22 und 23 auf. An jeder Seite 22 und 23 ist eine Vielzahl von Sektionen 24' bis 24n vorgesehen. Die Spindeln bzw. die Gleichstrommotoren 19 sind in den einzelnen Sektionen 24' bis 24n gruppiert. So können zum Beispiel zehn Spindeln und Gleichstrommotoren 19 pro Sektionen 24, 24' bis 24n vorhanden sein.

Wie aus der skizzierten Darstellung der **Figur 1** zu entnehmen ist, sind die Gleichspannungsnetze N1 und N2 mit ihren Spannungen U1 und U2 auf der Maschinenseite 22 von Sektion 24` bis Sektion 24m abwechselnd zugeordnet. Ebenso ist auf der anderen Maschinenseite 23 jede Sektion 24" bis zur Sektion 24n abwechselnd von dem Gleichspannungsnetz N1 und N2 mit ihren Spannungen U1 und U2 versorgt. Darüber hinaus sind auch einander gegenüberliegende Sektionen 24` und 24" bis zu den Sektionen 24m und 24n abwechselnd den Gleichspannungsnetzen N1 und N2 mit ihren Spannungen U1 und U2 zugeordnet. Dies hat den wesentlichen Vorteil, dass eine weitgehend gleichmässige Belastung der Gleichspannungsnetze N1 und N2 erfolgen wird. Ereignisse, welche sich an den einzelnen Gleichstrommotoren 19 ereignen und zu einem Spannungsabfall führen, sind häufig den einzelnen Maschinenseiten 22 oder 23 zuzuordnen. Dementsprechend ist trotz Ausfall beispielsweise einer Maschinenseite 22 oder 23 dennoch eine gleichmässige Auslastung der beiden Gleichspannungsnetze N1 und N2 durch die andere Maschinenseite 23 oder 22 gegeben. Spannungsspitzen in einem der Gleichspannungsnetze N1 oder N2 werden damit weitgehend verhindert.

**Figur 2** zeigt eine Skizze mit einer näheren Erläuterung der Spannungsausgleichseinrichtung 18. Die Spannungsausgleichseinrichtung 18 ist an die beiden Gleichspannungsnetze N1 und N2 angeschlossen. Wie aus **Figur 1** zu entnehmen ist, befindet sich das Gleichspannungsnetz N1 mit positiver Spannung U1 = +270 Volt zwischen der ersten Gleichspannungsschiene 3 und der dritten Gleichspannungsschiene 7. Das zweite Gleichspannungsnetz N2 mit negativer Spannung U2 = -270 Volt befindet sich zwischen der zweiten Gleichspannungsschiene 4 und der dritten Gleichspannungsschiene 7. Die zwischen der Gleichspannungsschiene 3 und der zweiten Gleichspannungsschiene 4 anliegende Spannung von 540 Volt wird durch die beiden Kondensatoren 5 und 6 entsprechend aufgeteilt. Für eine Symmetrie der aufgeteilten Spannungen sorgen die Symmetriewiderstände 8 und 9.

Die Spannungsausgleichseinrichtung 18 weist zwei Frequenzumrichter 25 und 26 auf. Ausgangsseitig sind die beiden Frequenzumrichter 25 und 26 mit einem Hochfrequenz-Trenntransformator 27 verbunden. Um eine Überlastung der beiden Frequenzumrichter 25 und 26 zu vermeiden, ist ihnen jeweils ein Bremswiderstand 28 und 29 zugeordnet. Die beiden Spannungen U1 und U2 der beiden Gleichspannungsnetze N1 und N2 können hierdurch ausgeglichen werden. Wenn eine der beiden Spannungen U1 oder U2 höher als die andere Spannung U2 oder U1 ist, so wird sie reduziert und die andere Spannung erhöht. Es findet somit eine Nivellierung der beiden Spannungen statt, wodurch die Spinnmaschine sehr stabil betrieben werden kann.

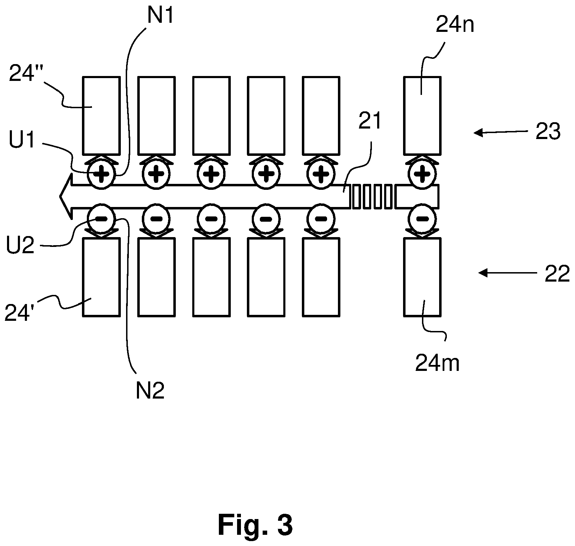

In **Figur 3** ist eine Skizze einer alternativen Spannungsverteilung in einer Spinnmaschine dargestellt. Während bei der Spannungsverteilung gemäss **Figur 1** die Spannungsverteilung in den einzelnen Sektionen 24' bis 24n alternierend bezüglich den Gleichspannungsnetzen N1 und N2 bzw. den Spannungen U1 bzw. U2 war, ist gemäss Ausführung der **Figur 3** die Spannungsverteilung abwechselnd den Arbeitsstellen bzw. Sektionen 24' bis 24n der beiden Seiten 22 und 23 der Spinnmaschine zugeordnet. Die Sektionen 24' bis 24 m hängen somit an dem Gleichspannungsnetz N2 mit der Spannung U2 = -270 Volt. Die Sektionen 24" bis 24n sind mit der Spannung U1 = +270 Volt aus dem Gleichspannungsnetz N1 versorgt. Eine derartige Zuordnung der Spannungsverteilung mag vorteilhaft sein, wenn davon ausgegangen werden kann, dass unterschiedliche Lasten auf den beiden Seiten 22 und 23 zu erwarten sind, die zu Spannungsveränderungen führen würden, welche die beiden Gleichspannungsnetze N1 und N2 unterschiedlich belasten und von der Spannungsausgleichseinrichtung 18 ausgeglichen werden müssen.

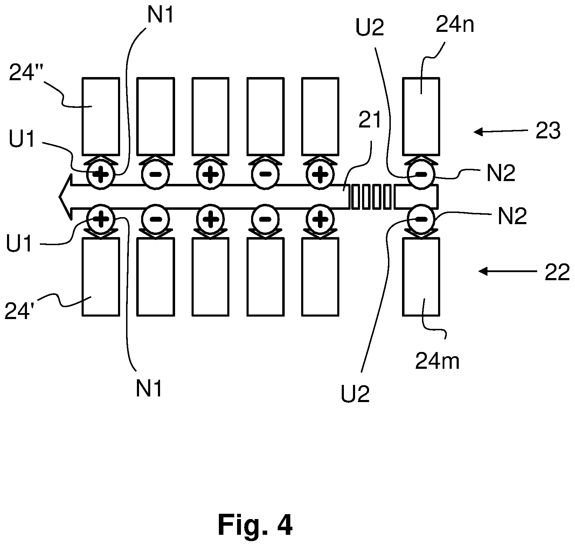

In **Figur 4** ist eine Skizze einer weiteren alternativen Spannungsverteilung in einer Spinnmaschine gezeigt. Hier weisen gegenüberliegende Sektionen 24' bis 24n eine gleiche Spannung U1 bzw. U2 auf. Dementsprechend sind die Sektionen 24` und 24" an das Gleichspannungsnetz N1 mit der Spannung U1 = +270 Volt angeschlossen. Die benachbarten Sektionen 24m und 24n hängen am Gleichspannungsnetz N2 der Spannung U2 = -270 Volt. Ähnlich wie bei der Spannungsverteilung aus **Figur 1** findet hier eine auf wechselnde Spannungsverteilung in den einzelnen Sektionen 24' bis 24 n statt. Allerdings hängen die einander gegenüberliegenden Sektionen 24' bis 24 n an demselben Gleichspannungsnetz N1 bzw. N2. Dies hat ähnliche Vorteile wie bei der Spannungsverteilung aus **Figur 1****,** kann aber zusätzliche Vorteile bei der Verkabelung der Spinnmaschine aufweisen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### BEZEICHNUNGSLISTE

- 1: Wechselspannungsquelle
- 2: Einspeiseeinheit
- 2.1: erste Gleichspannungsquelle
- 2.2: zweite Gleichspannungsquelle
- 3: erste Gleichspannungsschiene
- 4: zweite Gleichspannungsschiene
- 5: Elektrolytkondensatoren
- 6: Elektrolytkondensatoren
- 7: dritte Gleichspannungsschiene
- 8: Symmetriewiderstände
- 9: Symmetriewiderstände
- 10: Gleichstrommotor
- 11: Gleichstrommotor
- 12: Sicherung
- 13: Sicherung
- 14: Thermoschalter
- 15: Gleichspannungstransformator
- 16: Sicherungen
- 17: Thermoschalter
- 18: Spannungsausgleichseinrichtung

- 19: Gleichstrommotor
- 20: Verbindungselement
- 21: Gleichspannungsbus
- 22: Seite der Maschine
- 23: Seite der Maschine
- 24: Sektionen
- 25: Frequenzumrichter
- 26: Frequenzumrichter
- 27: Hochfrequenz-Trenntransformator
- 28: Bremswiderstand
- 29: Bremswiderstand
- U1: Spannung
- U2: Spannung
- U3: Spannung
- U4: Spannung
- N1: Gleichspannungsnetz
- N2: Gleichspannungsnetz
- N3: Gleichspannungsnetz

## Patentansprüche

1. Spinnmaschine
- mit einer Vielzahl von Arbeitsstellen mit elektrischen Antrieben, insbesondere Gleichstrommotoren (10, 11, 19),
- mit mindestens zwei Gleichspannungsquellen (2.1, 2.2) der Spannungen U1 und U2,
- welche jeweils ein Gleichspannungsnetz N1 und N2 bilden,
- wobei an den mindestens zwei Gleichspannungsquellen (2.1, 2.2) mindestens drei Gleichspannungsschienen (3, 4, 7) zur Versorgung einer Vielzahl der Antriebe, insbesondere der Gleichstrommotoren (10, 11, 19), angeschlossen sind, derart, dass
∘ die erste Gleichspannungsschiene (3) mit der ersten Gleichspannungsquelle (2.1),
∘ die zweite Gleichspannungsschiene (4) mit der zweiten Gleichspannungsquelle (2.2) und
∘ die dritte Gleichspannungsschiene (7) mit der ersten Gleichspannungsquelle (2.1) und der zweiten Gleichspannungsquelle (2.2) in Wirkverbindung steht,
- und wobei Stromabnehmer einer Vielzahl der Antriebe, insbesondere der Gleichstrommotoren (19), wahlweise an der ersten Gleichspannungsschiene (3) und der dritten Gleichspannungsschiene (7) oder an der zweiten Gleichspannungsschiene (4) und der dritten Gleichspannungsschiene (7) angeschlossen sind, **dadurch gekennzeichnet, dass** die beiden Gleichspannungsnetze N1 und N2 zum Ausgleich von Spannungsunterschieden in den beiden Gleichspannungsnetzen N1 und N2 mit einer Spannungsausgleichseinrichtung (18) wirkverbunden sind.

2. Spinnmaschine nach dem vorherigen Anspruch, **dadurch gekennzeichnet, dass** als Spannungsausgleichseinrichtung (18) jedem der Gleichspannungsnetze N1 und N2 ein Frequenzumrichter (25, 26) zugeordnet ist und dass die Frequenzumrichter (25, 26) ausgangsseitig mit einem Trenntransformator (27) verbunden sind.

3. Spinnmaschine nach einem oder mehreren der vorherigen Ansprüche, **dadurch gekennzeichnet, dass** die Spinnmaschine beidseitig Arbeitsstellen aufweist und jeweils ein Gleichspannungsnetz N1 bzw. N2 den Arbeitsstellen einer Seite (22, 23) zugeordnet ist.

4. Spinnmaschine nach einem oder mehreren der vorherigen Ansprüche, **dadurch gekennzeichnet, dass** die Spinnmaschine in Sektionen (24` bis 24 n) unterteilt ist, in denen jeweils eine Vielzahl von Arbeitsstellen angeordnet sind und jeweils ein Gleichspannungsnetz N1 bzw. N2 abwechselnd den benachbarten Sektionen (24` bis 24 n) zugeordnet ist.

5. Spinnmaschine nach einem oder mehreren der vorherigen Ansprüche, **dadurch gekennzeichnet, dass** die Spinnmaschine beidseitig Arbeitsstellen aufweist und in Sektionen (24` bis 24 n) unterteilt ist, in denen jeweils eine Vielzahl von Arbeitsstellen angeordnet sind und jeweils ein Gleichspannungsnetz N1 bzw. N2 abwechselnd den gegenüberliegenden Seiten (22, 23) und den benachbarten Sektionen (24` bis 24 n) zugeordnet ist.

6. Spinnmaschine nach einem oder mehreren der vorherigen Ansprüche, **dadurch gekennzeichnet, dass** weitere Antriebe, insbesondere Gleichstrommotoren (10, 11), an die erste Gleichspannungsschiene (3) und die zweite Gleichspannungsschiene (4) angeschlossen sind.

7. Spinnmaschine nach einem oder mehreren der vorherigen Ansprüche, **dadurch gekennzeichnet, dass** an zwei der Gleichspannungsschienen (3, 4, 7) zumindest ein Wechselrichter mit zumindest einem Wechselstrommotor und/oder ein Gleichspannungstransformator (15) für eine weitere Spannung U4 angeordnet ist.

8. Spinnmaschine nach einem oder mehreren der vorherigen Ansprüche, **dadurch gekennzeichnet, dass** der Trenntransformator (27) ein Hochfrequenztransformator ist.

9. Spinnmaschine nach einem oder mehreren der vorherigen Ansprüche, **dadurch gekennzeichnet, dass** die Frequenzumrichter (25, 26) Bremswiderstände (28, 29) aufweisen, um Spannungsspitzen zu begrenzen.

10. Spinnmaschine nach einem oder mehreren der vorherigen Ansprüche, **dadurch gekennzeichnet, dass** die beiden Gleichspannungsnetze N1 und N2 Symmetriewiderstände (8, 9) aufweisen, um einen Grundpegel der Gleichspannungsnetze N1 und N2 zu erhalten.

11. Spinnmaschine nach einem oder mehreren der vorherigen Ansprüche, **dadurch gekennzeichnet, dass** die beiden Gleichspannungsnetze N1 und N2 gegensinnig gepolt sind.

## Claims

1. Spinning machine
- with a plurality of workstations with electric drives, in particular DC motors (10, 11, 19),
- with at least two DC voltage sources (2.1, 2.2) of the voltages U1 and U2,
- which each form a DC voltage network N1 and N2,
- wherein at least three DC voltage rails (3, 4, 7) for supplying a plurality of drives, in particular the DC motors (10, 11, 19), are connected to the at least two DC voltage sources (2.1, 2.2) in such a way that
∘ the first DC voltage rail (3) is in operative connection with the first DC voltage source (2.1),
∘ the second DC voltage rail (4) is in operative connection with the second DC voltage source (2.2) and
∘ the third DC voltage rail (7) is in operative connection with the first DC voltage source (2.1) and the second DC voltage source (2.2),
- and wherein current collectors of a plurality of the drives, in particular the DC motors (19), are optionally connected to the first DC voltage rail (3) and the third DC voltage rail (7) or to the second DC voltage rail (4) and the third DC voltage rail (7), **characterized in that** the two DC voltage networks N1 and N2 are operatively connected to a voltage equalization device (18) to compensate for voltage differences in the two DC voltage networks N1 and N2.

2. Spinning machine according to the preceding claim, **characterized in that** a frequency converter (25, 26) is assigned as the voltage equalization device (18) to each of the DC voltage networks N1 and N2 and that the frequency converters (25, 26) are connected on the output side to an isolating transformer (27).

3. Spinning machine according to one or more of the preceding claims, **characterized in that** the spinning machine has workstations on both sides, and a DC voltage network N1 or N2 is assigned to the workstations on one side (22, 23).

4. Spinning machine according to one or more of the preceding claims, **characterized in that** the spinning machine is divided into sections (24` to 24 n), in each of which a plurality of workstations is arranged, and one DC voltage network N1 or N2 each is alternatingly assigned to the adjacent sections (24' to 24 n).

5. Spinning machine according to one or more of the preceding claims, **characterized in that** the spinning machine has workstations on both sides and is subdivided into sections (24' to 24 n), in each of which a plurality of workstations is arranged, and one DC voltage network N1 and N2 each is alternately assigned to the opposite sides (22, 23) and the adjacent sections (24' to 24 n).

6. Spinning machine according to one or more of the preceding claims, **characterized in that** further drives, in particular DC motors (10, 11), are connected to the first DC voltage rail (3) and the second DC voltage rail (4).

7. Spinning machine according to one or more of the preceding claims, **characterized in that** at least one inverter with at least one AC motor and/or one DC voltage transformer (15) for a further voltage U4 is arranged on two of the DC voltage rails (3, 4, 7).

8. Spinning machine according to one or more of the preceding claims, **characterized in that** the isolating transformer (27) is a high-frequency transformer.

9. Spinning machine according to one or more of the preceding claims, **characterized in that** the frequency converters (25, 26) have braking resistors (28, 29) in order to limit voltage peaks.

10. Spinning machine according to one or more of the preceding claims, **characterized in that** the two DC voltage networks N1 and N2 have symmetry resistors (8, 9) in order to obtain a basic level of the DC voltage networks N1 and N2.

11. Spinning machine according to one or more of the preceding claims, **characterized in that** the two DC voltage networks N1 and N2 are polarized in opposite directions.

## Revendications

1. Métier à filer
- comportant une pluralité de postes de travail comportant des entraînements électriques, en particulier des moteurs à courant continu (10, 11, 19),
- comportant au moins deux sources de tension continue (2.1, 2.2) de tensions U1 et U2,
- lesquelles forment respectivement un réseau de tension continue N1 et N2,
- dans lequel au moins trois rails de tension continue (3, 4, 7) sont raccordées à moins deux sources de tension continue (2.1, 2.2) pour l'alimentation d'une pluralité d'entraînements, en particulier des moteurs à courant continu (10, 11, 19), de telle sorte que
∘ le premier rail de tension continue (3) est en liaison fonctionnelle avec la première source de tension continue (2.1),
∘ le deuxième rail de tension continue (4) est en liaison fonctionnelle avec la seconde source de tension continue (2.2) et
∘ le troisième rail de tension continue (7) est en liaison fonctionnelle avec la première source de tension continue (2.1) et la seconde source de tension continue (2.2),
- et dans lequel des pantographes d'une pluralité d'entraînements, en particulier des moteurs à courant continu (19), sont raccordés sélectivement au premier rail de tension continue (3) et au troisième rail de tension continue (7) ou au deuxième rail de tension continue (4) et au troisième rail de tension continue (7), **caractérisé en ce que** les deux réseaux de tension continue N1 et N2 sont reliés de manière fonctionnelle à un dispositif de compensation de tension (18) pour la compensation de différences de tension dans les deux réseaux de tension continue N1 et N2.

2. Métier à filer selon la revendication précédente, **caractérisé en ce qu'**un convertisseur de fréquence (25, 26) est associé à chacun des réseaux de tension continue N1 et N2 en tant que dispositif de compensation de tension (18) **et en ce que** les convertisseurs de fréquence (25, 26) sont reliés côté sortie à un transformateur de séparation (27).

3. Métier à filer selon une ou plusieurs des revendications précédentes, **caractérisé en ce que** le métier à filer présente des postes de travail des deux côtés et respectivement un réseau de tension continue N1 ou N2 est associé aux postes de travail d'un côté (22, 23).

4. Métier à filer selon une ou plusieurs des revendications précédentes, **caractérisé en ce que** le métier à filer est divisé en sections (24` à 24 n) dans lesquelles respectivement une pluralité de postes de travail sont disposés et respectivement un réseau de tension continue N1 ou N2 est associé alternativement aux sections (24` à 24 n) adjacentes.

5. Métier à filer selon une ou plusieurs des revendications précédentes, **caractérisé en ce que** le métier à filer présente des postes de travail des deux côtés et est divisé en sections (24` à 24 n) dans lesquelles respectivement une pluralité de postes de travail sont disposés et respectivement un réseau de tension continue N1 ou N2 est associé alternativement aux côtés (22, 23) opposés et aux sections (24` à 24 n) adjacentes.

6. Métier à filer selon une ou plusieurs des revendications précédentes, **caractérisé en ce que** d'autres entraînements, en particulier des moteurs à courant continu (10, 11), sont raccordés au premier rail de tension continue (3) et au deuxième rail de tension continue (4).

7. Métier à filer selon une ou plusieurs des revendications précédentes, **caractérisé en ce qu'**au moins un onduleur comportant au moins un moteur à courant alternatif et/ou un transformateur à tension continue (15) pour une autre tension U4 sont disposés sur deux des rails de tension continue (3, 4, 7).

8. Métier à filer selon une ou plusieurs des revendications précédentes, **caractérisé en ce que** le transformateur de séparation (27) est un transformateur haute fréquence.

9. Métier à filer selon une ou plusieurs des revendications précédentes, **caractérisé en ce que** les convertisseurs de fréquence (25, 26) présentent des résistances de freinage (28, 29) pour limiter des pics de tension.

10. Métier à filer selon une ou plusieurs des revendications précédentes, **caractérisé en ce que** les deux réseaux de tension continue N1 et N2 présentent des résistances en symétrie (8, 9) pour obtenir un niveau de base des réseaux de tension continue N1 et N2.

11. Métier à filer selon une ou plusieurs des revendications précédentes, **caractérisé en ce que** les deux réseaux de tension continue N1 et N2 sont polarisés en sens inverse.
